# EUROPÄISCHE PATENTSCHRIFT

(11) **EP 1 796 820 B1**
(45) Veröffentlichungstag und Bekanntmachung des Hinweises auf die Patenterteilung: **27.02.2008**
(21) Anmeldenummer: 05790978.0
(22) Anmeldetag: 22.09.2005
(51) Int. Cl.: B01D 53/46, B01D 53/68, B01D 53/78, F23G 7/06

(54) **ANORDNUNG ZUR REINIGUNG VON TOXISCHEN GASEN AUS PRODUKTIONSPROZESSEN**
ARRANGEMENT FOR PURIFYING TOXIC GASES FROM PRODUCTION PROCESSES
ENSEMBLE POUR EPURER DES GAZ TOXIQUES DE PROCEDES DE PRODUCTION

(30) Priorität: 28.09.2004 DE 102004047440
(43) Veröffentlichungstag der Anmeldung: 20.06.2007
(73) Patentinhaber: CENTROTHERM CLEAN SOLUTIONS GMBH + CO. KG, 89143 Blaubeuren (DE)
(72) Erfinder: HARTUNG, Robert Michael, 89143 Blaubeuren (DE)
(74) Vertreter: Lippert, Stachow & Partner
(86) Internationale Anmeldenummer: PCT/DE2005/001678
(87) Internationale Veröffentlichungsnummer: WO 2006/034684

(56) Entgegenhaltungen:
- EP-B- 0 702 771
- EP-B- 0 803 042
- US-A- 5 123 836

## Beschreibung

Die Erfindung betrifft eine Anordnung zur Reinigung von toxischen Gasen aus Produktionsprozessen durch thermische Umsetzung in einer Reaktorkammer und nachfolgende Behandlung der Reaktionsprodukte mit einem Sorptionsmittel in einer Wascheinrichtung zum Binden wasserlöslicher Reaktionsprodukte und zum Herausspülen fester Reaktionsprodukte.

Derartige toxische Gase fallen beispielsweise bei der Herstellung von Halbleiterschaltkreisen in großen Mengen an und können wegen deren Toxizität nicht unbehandelt in die Umwelt geleitet werden. Solche toxischen Gase sind beispielsweise HF, SiH₂Cl₂, SiCl₄, NH₃, C₂F₆, PH₃, BCl₃, NF₃ usw.

Es ist bekannt, dass die meisten dieser Abgase aus Halbleiterprozessen oder auch anderen chemischen Verfahren in der Regel durch Oxydation oder thermische Umsetzung unschädlich gemacht werden können. In der Regel erfolgt die thermische Umsetzung in einer Flamme, die mit Erdgas oder Wasserstoff und Luft bzw. Sauerstoff gespeist wird. Die Zufuhr weiterer Reaktionspartner, ausgenommen ggf. zusätzlicher Sauerstoff oder Luft ist hierfür nicht nötig. Die thermisch behandelten Reaktionsprodukte sind vollkommen unschädlich und liegen entweder in gasförmiger oder fester Form vor oder sind wasserlöslich. Die gasförmigen Reaktionsprodukte, wie Wasserdampf oder CO₂ können ohne weitere Nachbehandlung in die Umwelt geleitet werden.

Es versteht sich, dass für die thermische Umsetzung bereits eine Reihe von Verbrennungsverfahren und Reaktionskammern entwickelt und praktisch eingesetzt worden sind. So ist aus der EP 0 346 803 B1 eine Anordnung zur Reinigung von Abgasen bekannt geworden, die aus einer Reaktionskammer besteht, in der unten ein Brenner angeordnet ist, der einerseits mit Brenngasen, wie Wasserstoff und Sauerstoff bzw. Luft oder Erdgas und Luft betrieben wird und dem andererseits da zu reinigenden Abgas zugeführt wird. Das bei der Verbrennung entstehende Reaktionsprodukt enthält sowohl feste Bestandteile, als auch wasserlösliche Reaktionsprodukte.

Um diese Reaktionsprodukte aus dem Abgas vollkommen beseitigen zu können, werden die bei der Verbrennung entstehenden Reaktionsprodukte unmittelbar nach der Verbrennung mit einem Sorptionsmittel, beispielsweise Wasser, in Verbindung gebracht. Das erfolgt dadurch, dass oberhalb der Brennerflamme eine Sprüheinrichtung für das Wasser angeordnet ist, welches entgegen dem aufsteigenden Gasstrom der Reaktionsprodukte gesprüht wird. Die Sprüheinrichtung kann dabei derart ausgebildet sein, dass das ausgesprühte Sorptionsmittel nicht in die Flamme gesprüht wird (EP 0 702 771 B1) oder es wird oberhalb der Brennerflamme eine Spritzschutzeinrichtung (Kegel, Kugelkalotte o.dgl.) angeordnet und über diesem Spritzschutz die Sprühreinrichtung angeordnet, wie aus der EP 0 346 803 B1 ersichtlich ist.

Ziel ist dabei, dass die wasserlöslichen Reaktionsprodukte aus dem Brennerabgas gelöst werden und dass die festen Bestandteile (z.B. SiO₂ als Reaktionsprodukt von Silan) aus der Reaktionskammer herausgespült werden. Dazu ist gemäß der DE 196 00 873 A1, oder auch aus der WO 03/085321 A1 vorgesehen, dass die Reaktionskammer nach oben durch einen Spritzschutz und radial durch eine zylinderförmige Wandung begrenzt wird und dass die gesamte Anordnung durch eine Außenwand umhüllt wird. Die festen Reaktionsprodukte werden dabei entlang der Innenseite der Außenwand, also außerhalb der Brennkammer, mit dem Sorptionsmittel nach unten gespült und neben dem unten angeordneten Brenner vorbei einer Aufberei-Nachteilig ist hierbei insbesondere, dass die Verbrennung bei relativ hohen Temperaturen durchgeführt werden muss und dass dadurch die Bauteile der Brennkammer auch hohen Temperaturen bzw. Temperaturwechselbelastungen ausgesetzt sind und damit vergleichsweise schnell verschleißen. Ein weiterer Nachteil ist darin zu sehen, das sich Reaktionsprodukte durch die nach oben brennende Flamme im oder am Brenner ablagern können. Die Folge ist eine stetige Verschlechterung der Effektivität und die Notwendigkeit häufiger Reinigungsvorgänge.

Letzterer Nachteil wurde weitgehend dadurch beseitigt, dass die Brennerdüse oben in der Brennkammer angeordnet wurde, wie aus der EP 0 803 042 B1 hervorgeht und dass die Flamme dadurch nach unten brennt. Ablagerungen fester Reaktionsprodukte am Brenner wurden damit erheblich reduziert und damit eine deutlich verbesserte Standzeit erreicht. Das Problem der hohen Temperaturbelastung der Reaktionskammer blieb dadurch aber bestehen. Die Folge sind erhebliche Serviceaufwendungen.

US 5 123 836 A offenbart eine Anordnung zur Reinigung von toxischen Gasen aus Produktionsprozessen mit einer Reaktorkammer an deren Wand innenseitig ein Wasserfilm nach unten fließt. Am oberen Ende der Reaktorkammer ist ein Brenner zur thermischen Behandlung der toxischen Gase angeordnet. Am unteren Ende der Reaktorkammer ist ein Auslass für die Abgase sowie das Wasser vorgesehen.

Bei anderen Abgasreinigungsverfahren wird mit einer nach oben brennenden Flamme und nachfolgender katalytischer Abgasbehandlung gearbeitet (EP 0 736 322 B1). Es hat sich jedoch gezeigt, dass dennoch eine abschließende Behandlung mit einem Sorptionsmittel sinnvoll und notwendig ist.

Der Erfindung liegt nunmehr die Aufgabe zugrunde, eine Anordnung zur Reinigung von toxischen Gasen aus Produktionsprozessen zu schaffen, die eine höchst effektive Reinigung bei hohem Gasdurchsatz erreicht und gleichzeitig eine sehr wirksame Kühlung der Reaktionskammer ermöglicht.

Die der Erfindung zugrunde liegende Aufgabe wird dadurch gelöst, dass die Reaktorkammer aus einer Außen- und einer Innenwand besteht, wobei die Innenwand sich in einem vorgegebenen Winkel trichterförmig nach unten verjüngt, dass auf der Reaktorkammer, diese nach oben verschließend, eine Einrichtung zur thermischen Behandlung der toxischen Gase angeordnet ist, dass die sich nach unten verjüngende Innenwand der Reaktorkammer auf der Innenseite einen gleichmäßig nach unten fließenden Wasserfilm aufweist, wobei die Innenwand der Reaktorkammer außen durch einen Wassermantel umgeben ist und dass am unteren Ende der sich verjüngenden Innenwand ein Abgasauslass und ein Anschluss für einen Wasserkreislauf angeordnet ist.

In einer ersten Ausgestaltung der Erfindung ist die Einrichtung zur thermischen Behandlung der toxischen Abgase ein Brenner mit nach unten brennender Flamme, welche in die Reaktorkammer nach unten hineinbrennt.

Der Brenner ist dabei bevorzugt als ein außenmischender Brenner mit mindestens einer zentralen Zuführung für die zu behandelnden toxischen Abgase ausgeführt.

Um einen möglichst hohen Durchsatz an zu behandelnden toxischen Abgasen zu erreichen, sind mehrere Zuführungen vorgesehen, wobei die Düsen für das Brenngas und die Düsen für Luft oder Sauerstoff die zentralen Zuführungen für das toxische Abgas umgeben.

In einer zweiten Ausgestaltung der Erfindung ist die Einrichtung zur thermischen Behandlung der toxischen Abgase eine elektrisch beheizte Kammer, wobei mehrere Zuführungen für das thermisch zu behandelnde toxische Abgas vorgesehen sind.

Für die effektive Heizung der Kammer sind mehrere parallel nebeneinander angeordnete und in die Kammer hineinragende Heizstäbe vorgesehen, die eine gleichmäßige Erwärmung des Kammervolumens zumindest im Durchströmungsbereich der zu behandelnden toxischen Abgase ermöglichen.

In Fortführung der Erfindung sind die Außen- und die Innenwand unten mit einer kreisringförmigen Bodenplatte derart miteinander verbunden, dass der Zwischenraum zwischen der Innenwand und der Außenwand im wesentlichen vollständig mit Wasser befüllbar ist, wobei der obere Rand der Innenwand als Überlauf für das im Zwischenraum befindliche Wasser ausgebildet ist und dass der Zwischenraum mit einer Wasserzuführung verbunden ist.

Der Wasserzuführung ist entweder eine Regeleinrichtung oder eine Drosseleinrichtung für das dem Zwischenraum zuzuführende Wasser zugeordnet.

In einer weiteren Ausgestaltung der Erfindung ist vorgesehen, dass der Abgasauslass der Innenwand mit einer neben der Reaktorkammer angeordneten und mit einem Füllmaterial gefüllten Waschkolonne verbunden ist, um eine wirksame Nachbehandlung behandelten toxischen Abgase zu ermöglichen und um insbesondere die wasserlöslichen Bestandteile aus dem Reaktionsabgas entfernt werden.

Weiterhin ist vorgesehen, dass zwischen dem Abgasauslass und der Waschkolonne eine Kühleinrichtung für das die Innenkammer verlassende thermisch behandelte Abgas angeordnet ist, die mindestens aus einer Sprühdüse für Wasser besteht.

Der Sprühstrahl der mindestens einen Sprühdüse ist dabei bevorzugt gegen die Gasströmungsrichtung gerichtet.

Eine weitere Ausgestaltung der Erfindung sieht vor, dass die Wasserzuführung aus einem Standrohr im Zwischenraum besteht, wobei das Standrohr einen Wasserauslass über der Bodenplatte des zwischenraumes aufweist.

Um eine Redundanz zu erreichen, sind weiterhin zwei Reaktorkammern vorgesehen, deren Auslässe jeweils alternativ mit der Waschkolonne und einem Wasserkreislauf koppelbar sind.

Schließlich ist vorgesehen, dass der Anschluss für den Wasserkreislauf jeder Reaktorkammer mit einem Wassertank gekoppelt ist, der mit einer Filtereinrichtung für feste Reaktionsprodukte und einer Pumpe zum Füllen des Zwischenraumes verbunden ist.

Die Erfindung soll nachfolgend an einem Ausführungsbeispiel näher erläutert werden. In den zugehörigen zeichnungsfiguren zeigen:
- Fig. 1:: eine schematische Schnittdarstellung einer Reaktorkammer mit aufgesetztem Brenner;
- Fig. 2:: eine vergrößerte Einzelheit A aus Fig. 1;
- Fig. 3:: eine schematische Teilschnittdarstellung der geöffneten Reaktorkammer nach Fig. 1 mit Wasserzuführung;
- Fig. 4:: eine schematische Schnittdarstellung einer Reaktorkammer mit elektrisch beheizter Reaktorkammer; und
- Fig. 5:: eine schematische Darstellung einer Anordnung zur Reinigung von toxischen Gasen aus Produktionsprozessen mit zwei gekoppelten Reaktorkammern und zugehöriger Waschkolonne zur Nachbehandlung des thermisch behandelten toxischen Abgases.

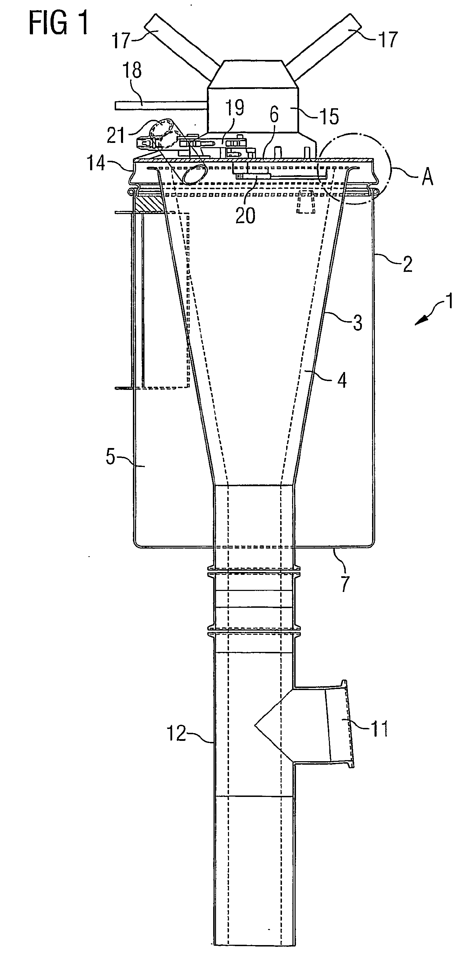

Fig. 1 zeigt eine schematische Schnittdarstellung einer Anordnung zur Reinigung von toxischen Gasen aus Produktionsprozessen mit einer Reaktorkammer 1 die aus einer Außen- und einer Innenwand 2, 3 besteht. Die Innenwand 3 verjüngt sich in einem vorgegebenen Winkel trichterförmig nach unten.

Entlang der die sich nach unten verjüngende Innenwand 3 der Reaktorkammer 1 fließt auf deren Innenseite eine gleichmäßiger Wasserfilm 4 nach unten. Dieser Wasserfilm ist in Fig. 1 durch eine gestrichelte Linie angedeutet. Um das zu erreichen, befindet sich zwischen der Innenwand 3 der Reaktorkammer 1 und der Außenwand 2 ein Wassermantel im Zwischenraum 5, dem ständig Wasser in einer vorgegebenen Menge zugeführt wird, so dass das zugeführte Wasser über den oberen Rand 6 der Innenwand 3 laufen kann und den Wasserfilm auf der Innenseite der Innenwand 3 bildet.

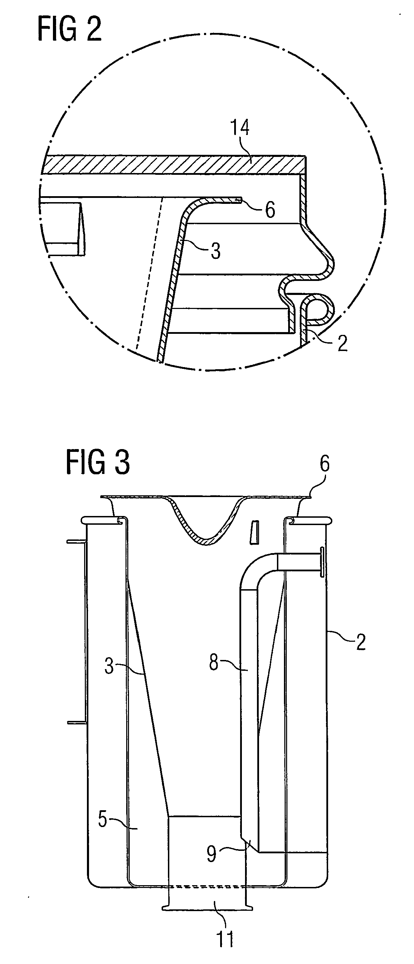

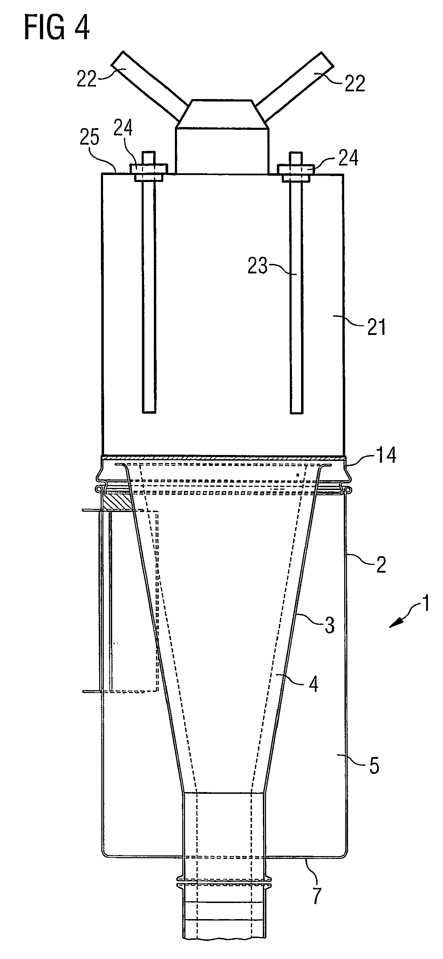

Dazu sind die Außen- und die Innenwand 2, 3 unten mit einer kreisringförmigen Bodenplatte 7 derart miteinander verbunden sind, dass der Zwischenraum 5 zwischen der Innenwand 3 und der Außenwand 2 im wesentlichen vollständig mit Wasser befüllbar ist, wobei der obere Rand 6 der Innenwand 3 als Überlauf für das im Zwischenraum 5 befindliche Wasser ausgebildet ist (Fig. 2). Die Zuführung des Wassers in den Zwischenraum 5 erfolgt über ein Standrohr 8, dessen Auslassöffnung 9 sich oberhalb der Bodenplatte 7 befindet (Fig. 3). Das Standrohr 8 ist mit einem Wasserkreislauf 10 verbunden, der in Fig. 4 schematisch dargestellt ist. In der Wasserzuführung zum Standrohr 8 kann eine Regeleinrichtung für das zuzuführende Wasser zugeordnet sein, die im einfachsten Fall aus einer Drosseleinrichtung für das zuzuführende Wasser besteht.

Am unteren Ende der sich verjüngenden Innenwand 3 befinden sich ein Abgasauslass 11, der die Bodenplatte 7 durchdringt und ein Anschluss 12, der in einem Wassertank 13 endet.

Auf der Reaktorkammer 1 ist ein Deckel 14 zur Verschluss der Brennkammer 1 angeordnet, indem der Deckel 14 mit der Oberkante der Außenwand 2 dicht verbunden ist, was durch einen üblichen Schnellverschluss erfolgen kann. Der Deckel 14 dient gleichzeitig zur Aufnahme eines Brenners 15 mit in die Reaktorkammer 1 gerichteten Düsen 16, so dass eine nach unten in die Reaktorkammer 1 hineinbrennende Flamme erzeugt werden kann.

Der Brenner 15 ist bevorzugt ein außenmischender Brenner mit einer zentralen Zuführung für die zu behandelnden toxischen Abgase. Die Zuführung der zu behandelnden Abgase erfolgt über mehrere Zuführleitungen 17, die in Fig. 1 schematisch angedeutet sind. Der Brenner 15 ist mit Düsen für Brenngas, z.B. Wasserstoff oder Erdgas und mit Düsen für Luft oder Sauerstoff versehen. Die entsprechende Brenngaszuführung 18 ist in Fig. 1 schematisch dargestellt. Zur Reinigung der Brenneröffnung innerhalb der Reaktorkammer 1 ist eine von außen betätigbare Reinigungseinrichtung 19 mit einem Kratzer 20.

Mit dem Wassermantel im Zwischenraum 5 wird eine intensive Kühlung der Reaktorkammer 1 insgesamt erreicht, so dass sämtliche Bauteile wie Innenwand 3 und Außenwand 2 kaum thermisch belastet werden. Weiterhin sorgt der Wasserfilm 4 auf der Innenseite der Innenwand 3 für eine starke Dämpfung der Strahlungshitze der Flamme. Gleichzeitig verhindert der Wasserfilm 4 Ablagerungen auf der Innenseite der Innenwand 3 und im Anschluss 12 für den Wassertank 13 und teilweise auch im Abgasauslass 11. Zum Zünden der Brennerflamme befindet sich im Deckel 14 weiterhin ein Pilotbrenner 21.

Anstelle des Brenners 15 kann auch eine elektrisch beheizte Kammer 21 mit mehreren Zuführungen 22 für die thermisch zu behandelnden toxischen Abgase auf die Reaktorkammer 1 aufgesetzt werden (Fig. 4). In der Kammer 21 befinden sich mehrere parallel nebeneinander angeordnete und in diese hineinragende Heizstäbe 23, die mittels isolierender Durchführungen 24 in der Deckplatte 25 der Kammer 21 befestigt sind.

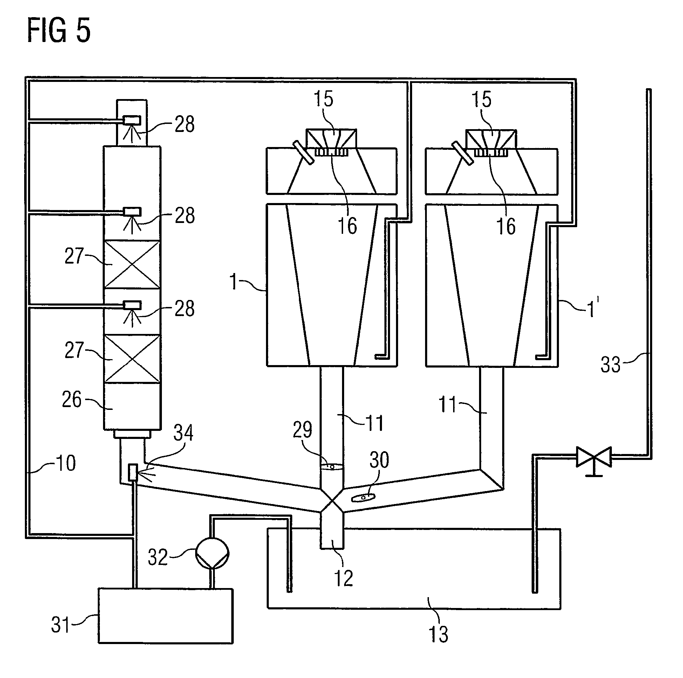

Für die nachfolgende Behandlung der Reaktionsprodukte mit einem Sorptionsmittel zum Binden wasserlöslicher Reaktionsprodukte und zum Herausspülen fester Reaktionsprodukte befindet sich neben der Reaktionskammer 1 eine Waschkolonne 26. Dazu ist der Abgasauslass 11 der Innenwand 3 mit Waschkolonne 26 verbunden ist (Fig. 5).

In der Waschkolonne 26 befindet sich ein Füllmaterial 27 und mehrere Sprühdüsen 28, aus denen ein Sorptionsmittel gesprüht wird.

Zur Kühlung der die Reaktorskammer 1 verlassenden Abgase befindet sich zwischen dem Abgasauslass 11 und der Waschkolonne 26 eine Kühleinrichtung in Form von mindestens einer Sprühdüse 34, deren Sprühstrahl gegen die Gasströmungsrichtung gerichtet ist.

Um eine gewisse Redundanz der erfindungsgemäßen Anordnung zu erreichen, können auch zwei Reaktorkammern 1, 1' vorgesehen werden, deren Auslässe 11 alternativ mit der Waschkolonne 26 und dem Wassertank 13 koppelbar sind (Fig. 5). Hierzu sind in den Zuleitungsrohren Drosselklappen 29, 30 angeordnet.

Der Anschluss 12 für den Wasserkreislauf jeder Reaktorkammer 1, 1' ist mit dem Wassertank 13 verbunden, der mit einer Filtereinrichtung 31 für feste Reaktionsprodukte und einer Pumpe 32 zum Füllen des Zwischenraumes 5 gekoppelt ist. Weiterhin ist der Wassertank 13 über einen Wasseranschluss 33 befüllbar.

### Bezugszeichenliste

- 1: Reaktorkammer
- 2: Außenwand
- 3: Innenwand
- 4: Wasserfilm
- 5: Zwischenraum
- 6: Rand
- 7: Bodenplatte
- 8: Standrohr
- 9: Auslassöffnung
- 10: Wasserkreislauf
- 11: Abgasauslass
- 12: Anschluss für Wassertank
- 13: Wassertank
- 14: Deckel
- 15: Brenner
- 16: Düse
- 17: Zuführung für toxische Abgase
- 18: Brenngaszuführung
- 19: Reinigungseinrichtung
- 20: Kratzer
- 21: Kammer
- 22: Zuführung für toxische Abgase
- 23: Heizstab
- 24: Durchführung
- 25: Deckplatte
- 26: Waschkolonne
- 27: Füllmaterial
- 28: Sprühdüse
- 29: Drosselklappe
- 30: Drosselklappe
- 31: Filtereinrichtung
- 32: Pumpe
- 33: Wasseranschluss
- 34: Sprühdüse

## Patentansprüche

1. Anordnung zur Reinigung von toxischen Gasen aus Produktionsprozessen durch thermische Umsetzung in einer Reaktorkammer und nachfolgende Behandlung der Reaktionsprodukte mit einem Sorptionsmittel in einer Wascheinrichtung zum Binden wasserlöslicher Reaktionsprodukte und zum Herausspülen fester Reaktionsprodukte, **dadurch gekennzeichnet, dass** die Reaktorkammer (1) aus einer Außen- und einer Innenwand (2, 3) besteht, wobei die Innenwand (3) sich in einem vorgegebenen Winkel trichterförmig nach unten verjüngt, dass auf der Reaktorkammer (1), diese nach oben verschließend, eine Einrichtung zur thermischen Behandlung der toxischen Gase angeordnet ist, dass die sich nach unten verjüngende Innenwand (3) der Reaktorkammer (1) auf der Innenseite einen gleichmäßig nach unten fließenden Wasserfilm (4) aufweist, wobei die Innenwand der Reaktorkammer (1) außen durch einen Wassermantel umgeben ist und dass am unteren Ende der sich verjüngenden Innenwand (3) ein Abgasauslass (11) und ein Anschluss (12) für einen Wasserkreislauf angeordnet ist.

2. Anordnung nach Anspruch 1, **dadurch gekennzeichnet, dass** die Einrichtung zur thermischen Behandlung der toxischen Abgase ein Brenner (15) mit nach unten brennender Flamme ist, die in die Reaktorkammer (1) nach unten hineinbrennt.

3. Anordnung nach Anspruch 2, **dadurch gekennzeichnet, dass** der Brenner (15) ein außenmischender Brenner mit mindestens einer zentralen Zuführung (17) für die zu behandelnden toxischen Abgase ist.

4. Anordnung nach Anspruch 3, **dadurch gekennzeichnet, dass** mehrere Zuführungen (17) für die zu behandelnden toxischen Abgase vorgesehen sind, wobei die Düsen für das Brenngas und die Düsen für Luft oder Sauerstoff die zentralen Zuführungen (17) umgeben.

5. Anordnung nach Anspruch 1, **dadurch gekennzeichnet, dass** die Einrichtung zur thermischen Behandlung der toxischen Abgase eine elektrisch beheizte Kammer (21) ist, wobei mehrere Zuführungen (17) für das thermisch zu behandelnde toxische Abgas vorgesehen sind.

6. Anordnung nach Anspruch 5, **dadurch gekennzeichnet, dass** die Kammer (21) durch mehrere parallel nebeneinander angeordnete und in die Kammer (21) hineinragende Heizstäbe (23) beheizbar ist.

7. Anordnung nach einem der vorhergehenden Ansprüche, **dadurch gekennzeichnet, dass** die Außen- und die Innenwand (2, 3) unten mit einer kreisringförmigen Bodenplatte (7) derart miteinander verbunden sind, dass der Zwischenraum (5) zwischen der Innenwand (3) und der Außenwand (2) im wesentlichen vollständig mit Wasser befüllbar ist, wobei der obere Rand (6) der Innenwand (3) als Überlauf für das im Zwischenraum (5) befindliche Wasser ausgebildet ist und dass der Zwischenraum (5) mit einer Wasserzuführung verbunden ist.

8. Anordnung nach Anspruch 7, **dadurch gekennzeichnet, dass** der Wasserzuführung eine Regeleinrichtung für das dem Zwischenraum (5) zuzuführende Wasser zugeordnet ist.

9. Anordnung nach Anspruch 7, **dadurch gekennzeichnet, dass** der Wasserzuführung eine Drosseleinrichtung für das zuzuführende Wasser zugeordnet ist.

10. Anordnung nach einem der Ansprüche 1 bis 9, **dadurch gekennzeichnet, dass** der Abgasauslass (11) mit einer neben der Reaktorkammer (1) angeordneten Waschkolonne (26) verbunden ist.

11. Anordnung nach Anspruch 10, **dadurch gekennzeichnet, dass** zwischen dem Abgasauslass (11) und der Waschkolonne (26) eine Kühleinrichtung für das die Innenkammer (3) verlassende thermisch behandelte Abgas angeordnet ist.

12. Anordnung nach Anspruch 11, **dadurch gekennzeichnet, dass** die Kühleinrichtung aus mindestens einer Sprühdüse (34) für Wasser besteht.

13. Anordnung nach Anspruch 12, **dadurch gekennzeichnet, dass** der Sprühstrahl der mindestens einen Sprühdüse (34) gegen die Gasströmungsrichtung gerichtet ist.

14. Anordnung nach einem der Ansprüche 1 bis 13, **dadurch gekennzeichnet, dass** die Wasserzuführung für den Zwischenraum (5) aus einem Standrohr (8) besteht, dass einen Wasserauslass (9) über der Bodenplatte (7) aufweist.

15. Anordnung nach einem der Ansprüche 1 bis 14, **dadurch gekennzeichnet, dass** zwei Reaktorkammern (1, 1') vorgesehen sind, deren Auslässe (11) alternativ mit der Waschkolonne (26) und einem Wasserkreislauf (10) koppelbar sind.

16. Anordnung nach einem der Ansprüche 1 bis 15, **dadurch gekennzeichnet, dass** der Anschluss (12) für den Wasserkreislauf jeder Reaktorkammer (1, 1') mit einem Wassertank (13) verbunden ist, der mit einer Filtereinrichtung (31) für feste Reaktionsprodukte und einer Pumpe (32) zum Füllen des Zwischenraumes (5) verbunden ist.

## Claims

1. The invention relates to an assembly for purifying toxic gases from production processes by thermal conversion in a reactor chamber and to the subsequent treatment of the reaction products with a sorption agent in a washing device in order to bind watersoluble reaction products and to elute solid reaction products, **characterized in that** the reactor chamber (1) consists of an external and internal wall (2, 3), the internal wall (3) tapering at the base in the form of a funnel at a predetermined angle, **in that** a unit for the thermal treatment of the toxic gases is located on the reactor chamber (1), sealing the top of said chamber, **in that** the inner face of the internal wall (3) of the reactor chamber (1) that tapers at the base comprises a film of water (4) flowing downwards in a uniform manner, wherein the exterior of the internal wall of the reactor chamber (1) is surrounded by a cloak of water, and **in that** a waste gas outlet (11) and a connection (12) for a water circuit are located at the lower end of the tapering internal wall (3).

2. Assembly according to claim 1, **characterized in that** the unit for the thermal treatment of the toxic waste gases is a burner (15) with a downwardly burning flame, which is directed downwards into the reactor chamber (1).

3. Assembly according to claim 2, **characterized in that** the burner (15) is an external mixing burner with at least one central inlet (17) for the toxic waste gases to be treated

4. Assembly according to claim 3, **characterized in that** several inlets (17) are provided for the toxic waste gases to be treated, wherein the nozzles for the combustion gas and the nozzles for air or oxygen surround the central inlets (17).

5. Assembly according to claim 1, **characterized in that** the mechanism for the thermal treatment of the toxic waste gases is an electrically heated chamber (21), wherein several inlets (17) are provided for the toxic waste gas to be thermally treated.

6. Assembly according to claim 5, **characterized in that** the chamber (21) is heated by several heating rods (23), which are arranged parallel next to each other and extend into the chamber (21).

7. Assembly according to anyone of the above claims, **characterized in that** the external and the internal walls (2, 3) are connected to each other at the bottom with a circular base plate (7) so that the inter-space (5) between the internal wall (3) and the external wall (2) is substantially completely filled with water, wherein the top edge (6) of the internal wall (3) is formed as a weir for the water present in the inter-space (5), and so that the inter-space (5) is connected to a water supply.

8. Assembly according to claim 7, **characterized in that** control means for the water to be fed to the inter-space (5) is assigned to the water inlet.

9. Assembly according to claim 7, **characterized in that** a restrictor device for the water to be supplied is assigned to the water inlet.

10. Assembly according to anyone of claims 1 to 9, **characterized in that** the waste gas outlet (11) is connected to a wash column (26) arranged beside the reactor chamber (1).

11. Assembly according to claim 10, **characterized in that** a cooling device for the thermally treated waste gas leaving the interior chamber (3) is arranged between the waste gas outlet (11) and the wash column (26).

12. Assembly according to claim 11, **characterized in that** the cooling device consists of at least one spray nozzle (34) for water.

13. Assembly according to claim 12, **characterized in that** the spray jet from the at least one spray nozzle (34) is directed against the direction of the gas stream.

14. Assembly according to anyone of claims 1 to 13, **characterized in that** the water supply for the inter-space (5) consists of a standpipe (8), which has a water discharge opening (9) above the base plate (7).

15. Assembly according to anyone of claims 1 to 14, **characterized in that** two reactor chambers (1,1'), whose outlets (11) can be linked alternatively with the wash column (26) and a water circuit (10), are provided.

16. Assembly according to anyone of claims 1 to 15, **characterized in that** the connection (12) for the water circuit of each reactor chamber (1,1') is connected to a water tank (13), which is connected to a filter device (31) for solid reaction products and a pump (32) for filling the inter-space (5).

## Revendications

1. Installation de nettoyage de gaz toxiques de procédés de fabrication par conversion thermique dans une chambre de réacteur, suivie d'un traitement des produits de réaction avec un agent de sorption dans une installation de lavage pour combiner les produits de réaction solubles dans l'eau et pour éliminer par rinçage les produits de réaction solides,
**caractérisée en ce que**
la chambre de réaction (1) a une paroi extérieure et une paroi intérieure (2, 3),
la paroi intérieure (3) allant en diminuant vers le bas en forme de trémie selon un angle donné,
la chambre de réaction (1) comporte une installation de traitement thermique qui ferme le dessus de la chambre pour les gaz toxiques,
la paroi intérieure (3) allant en diminuant vers le bas de la chambre de réaction (1), présente sur la face intérieure, un film d'eau (4) qui s'écoule régulièrement vers le bas,
la paroi intérieure de la chambre de réaction (1) étant entourée extérieurement d'une chemise d'eau et
l'extrémité inférieure de la paroi intérieure (3) qui se rétrécit, a une sortie de gaz d'échappement (11) et un branchement (12) pour un circuit d'eau.

2. Installation selon la revendication 1,
**caractérisée en ce que**
l'installation de traitement thermique des gaz d'échappement toxiques est un brûleur (15) avec une flamme descendante, qui brûle dans le sens descendant dans la chambre de réaction (1).

3. Installation selon la revendication 2,
**caractérisée en ce que**
le brûleur (15) est un brûleur à mélange extérieur, ayant au moins une alimentation centrale (17) pour les gaz d'échappement toxiques à traiter.

4. Installation selon la revendication 3,
**caractérisée par**
plusieurs alimentations (17) de gaz d'échappement toxiques à traiter, les buses des gaz de combustion et celles de l'air ou de l'oxygène entourant les alimentations centrales (17).

5. Installation selon la revendication 1,
**caractérisée en ce que**
l'installation de traitement thermique des gaz d'échappement toxiques est une chambre (21) à chauffage électrique, avec plusieurs alimentations (17) des gaz d'échappement toxiques à traiter par voie thermique.

6. Installation selon la revendication 5,
**caractérisée en ce que**
la chambre (21) est chauffée par plusieurs barreaux chauffants (23), parallèles, juxtaposés, pénétrant dans la chambre (21).

7. Installation selon l'une des revendications précédentes,
**caractérisée en ce que**
la paroi extérieure et la paroi intérieure (2, 3) sont reliées en partie inférieure à une plaque de fond (7) en forme d'anneau de cercle de façon que l'espace intermédiaire (5) entre la paroi intérieure (3) et la paroi extérieure (2) soit rempli pratiquement complètement avec de l'eau,
le bord supérieur (6) de la paroi intérieure (3) étant réalisé comme débordement pour l'eau qui se trouve dans l'espace intermédiaire (5) et celui-ci (5) est relié à une alimentation en eau.

8. Installation selon la revendication 7,
**caractérisée en ce que**
l'alimentation en eau comporte une installation de régulation pour l'eau à fournir à l'espace intermédiaire (5).

9. Installation selon la revendication 7,
**caractérisée en ce que**
l'alimentation en eau comporte une installation d'étranglement pour l'eau à fournir.

10. Installation selon l'une des revendications 1 à 9,
**caractérisée en ce que**
la sortie des gaz d'échappement (11) est reliée à une colonne de lavage (26) installée à côté de la chambre de réaction (1).

11. Installation selon la revendication 10,
**caractérisée par**
une installation de refroidissement des gaz d'échappement traités thermiquement et quittant la chambre intérieure (3), entre la sortie des gaz d'échappement (11) et la colonne de lavage (26).

12. Installation selon la revendication 11,
**caractérisée en ce que**
l'installation de refroidissement est formée d'au moins une buse de pulvérisation (34) pour l'eau.

13. Installation selon la revendication 12,
**caractérisée en ce que**
le jet de pulvérisation d'au moins une buse de pulvérisation (34) est dirigé dans la direction opposée à la direction de passage des gaz.

14. Installation selon l'une des revendications 1 à 13,
**caractérisée en ce que**
l'alimentation en eau de l'espace intermédiaire (5) est un tube vertical (8) ayant une sortie d'eau (9) au-dessus de la plaque de fond (7).

15. Installation selon l'une des revendications 1 à 14,
**caractérisée par**
deux chambres de réaction
(1, 1') dont les sorties (11) sont couplées alternativement à la colonne de lavage (26) et à un circuit d'eau (10).

16. Installation selon l'une des revendications 1 à 15,
**caractérisée en ce que**
le branchement (12) du circuit d'eau de chaque chambre de réaction (1, 1') est relié à un réservoir d'eau (13) lui-même relié par une installation de filtre (31) pour les produits de réaction solides et une pompe (32) pour remplir l'espace intermédiaire (5).
